# EUROPÄISCHE PATENTSCHRIFT

(11) **EP 0 936 447 B1**
(45) Veröffentlichungstag und Bekanntmachung des Hinweises auf die Patenterteilung: **24.09.2003**
(21) Anmeldenummer: 99102138.7
(22) Anmeldetag: 03.02.1999
(51) Int. Cl.: G01D 5/48, G01N 29/04

(54) **Polymer-Werkstoff und Herstellungsverfahren, sowie System und Verfahren zur Materialüberprüfung von Polymer-Werkstoffen und Bauteilen**
Polymer material and manufacturing process, system and process for testing polymer materials and structural elements
Matériau en polymère et procédé de fabrication, système et procédé pour le contrôle de matériaux en polymère et d'éléments de construction

(30) Priorität: 12.02.1998 DE 19805584
(43) Veröffentlichungstag der Anmeldung: 18.08.1999
(73) Patentinhaber: EADS Deutschland GmbH, 85521 Ottobrunn (DE)
(72) Erfinder: Göbel, Johann, 81547 München (DE); Mittelbach, Andreas Dr., 82008 Unterhaching (DE)

(56) Entgegenhaltungen:
- DE-A- 4 441 333
- DE-A- 19 630 890

## Beschreibung

Die vorliegende Erfindung betrifft einen Polymer-Werkstoff, ein Verfahren zur Herstellung eines Polymer-Werkstoffs, ein System zur Materialüberprüfung von Bauteilen sowie ein Verfahren zur Materialüberprüfung von Polymer-Werkstoffen.

Polymerwerkstoffe, wie z. B. Faserverbundwerkstoffe und strukturelle Klebstoffe, werden aufgrund ihrer Steifigkeit und ihres geringen Gewichtes zunehmend in hochbelasteten Strukturen bzw. Bauteilen verwendet. Durch hohe oder lang andauernde Belastungen derartiger Bauteile können Strukturschäden innerhalb der Bauteile auftreten. Ein Nachteil von Polymerwerkstoffen ist dabei, daß derartige Strukturschäden meist optisch nicht erfaßt werden können. Beispielsweise können an Flugzeugen durch Vogelschlag Schädigungen auftreten, die nur schwer oder gar nicht festgestellt werden können und hohe Risiken in sich bergen.

Um an solchen Strukturen Qualitätsaussagen und eine Schadenserkennung zu ermöglichen, wurden eine Vielzahl von zerstörenden und zerstörungsfreien Prüfverfahren entwickelt, wie z.B. das Spechtverfahren, Ultraschallmessungen und Thermographie. Die meisten dieser Verfahren beruhen auf einer optischen oder einer akustischen Anregung des zu untersuchenden Materials und einem sich daraus ergebenden Belastungs-/Laufzeitprofil. Aus dem so erhaltenen Datenmaterial kann der Fachmann Rückschlüsse über den Zustand des Prüfkörpers ziehen. Viele der Methoden versagen allerdings bei komplizierteren Strukturen oder sie benötigen einen enormen Meßaufwand, wie z.B. bei der Verwendung von Temperierkammern. Darüber hinaus müssen die gewonnenen Daten interpretiert werden, was ein außerordentlich hohes Maß an Erfahrung erfordert, um Fehler auszuschließen. Bei diesen herkömmlichen Verfahren besteht weiterhin der Nachteil, daß eine vergleichende Beurteilung identischer oder wiederholter Messungen kaum möglich ist, da identische Ankoppelbedingungen, die zu einer vergleichenden Beurteilung erforderlich sind, kaum realisierbar sind. Darüber hinaus kann bei den herkömmlichen Verfahren nur ein existierender Schaden detektiert werden. Eine Schadensfrüherkennung ist nicht möglich. Viele der bekannten Prüfverfahren sind im Bereich von Klebungen bzw. Klebeverbindungen nicht möglich, da die notwendigen Ankoppelbedingungen hier nicht realisierbar sind.

Bei einem bekannten Verfahren zur Überprüfung von Werkstoffen wurden Glasfasern in den Werkstoff eingebracht, um eine Untersuchung der Glasfaserstruktur durch Licht zu ermöglichen. Derartige Werkstoffe benötigen einen hohen Aufwand sowohl bei der Herstellung als auch bei der Durchführung des Prüfverfahrens, und eine genaue Lokalisierung des Schadens ist kaum oder nur unter großem Aufwand möglich.

Die Druckschrift DE 196 30 890 A1 zeigt einen Oberflächenwellen-Flüssigkeitssensor, der dazu dient, Messungen in Flüssigkeiten durchzuführen. Der Flüssigkeitssensor hat auf einem piezoelektrischen Substrat aufgebrachte kammförmige Elektroden als Interdigitalwandler, um physikalische Flüssigkeitseigenschaften zu messen.

Es ist die Aufgabe der vorliegenden Erfindung, einen Werkstoff zu schaffen, der leicht und sicher auf Strukturschäden hin überprüfbar ist, eine vergleichende Bewertung und Prüfung ermöglicht, und auf rationelle Weise herstellbar ist. Weiterhin soll ein Verfahren zur Herstellung eines Werkstoffs angegeben werden, sowie ein System und ein Verfahren zur Materialüberprüfung von Werkstoffen, mit dem eine einfache, sichere und rasche Überprüfung des Werkstoffs auf Schäden hin und eine Schadensfrüherkennung ermöglicht wird.

Diese Aufgabe wird gelöst durch den Polymer-Werkstoff gemäß Patentanspruch 1, das Verfahren zur Herstellung eines Polymer-Werkstoffs gemäß Patentanspruch 5, das System zur Materialüberprüfung von Bauteilen gemäß Patentanspruch 8, sowie das Verfahren zur Materialüberprüfung von Polymer-Werkstoffen gemäß Patentanspruch 9. Weitere vorteilhafte Merkmale, Aspekte und Details der Erfindung ergeben sich aus den abhängigen Ansprüchen; der Beschreibung und den Zeichnungen.

Gemäß einem Aspekt der Erfindung wird ein Polymer-Werkstoff geschaffen, mit ein oder mehreren piezoelektrischen Elementen, die in den Polymer-Werkstoff einlaminiert oder eingeklebt sind und eine Interdigitalstruktur zur Erzeugung einer Oberflächenwelle aufweisen, die mit dem angrenzenden Polymer-Werkstoff in Wechselwirkung tritt, sowie einen Reflektor zur Reflexion der Oberflächenwelle, wobei die Interdigitalstruktur an eine Antennenstruktur gekoppelt ist, um ein durch die reflektierte Oberflächenwelle erzeugtes Signal der Interdigitalstruktur drahtlos an eine außerhalb des Polymer-Werkstoffs gelegene Empfangs- und Auswerteeinheit zu übertragen, zur Detektion von Strukturschäden oder Materialveränderungen des Polymer-Werkstoffs. Durch die Erfindung wird ein Werkstoff geschaffen, der leicht und sicher auf Strukturschäden hin überprüfbar ist. Weiterhin ermöglicht der Polymer-Werkstoff eine vergleichende Bewertung und Prüfung, sowie eine Schadensfrüherkennung.

Der Polymer-Werkstoff kann z.B. insbesondere ein Faserverbundwerkstoff sein mit ein oder mehreren piezoelektrischen Elementen als Sensoren zur Erfassung von Meßgrößen, die eine Information über den Zustand und/oder die Qualität des Werkstoffs enthalten, wobei die Sensoren zur Aufnahme von Energie und zur Erzeugung eines Signales ausgebildet sind, das die Information enthält, und wobei die Sensoren im Werkstoff integriert sind.

Durch die Integration der piezoelektrischen Elemente im Werkstoff wird eine immer gleiche und optimale Ankopplung an den Prüfkörper erreicht. Somit ist eine vergleichende Bewertung und Prüfung der zu prüfenden Struktur oder einer Klebung möglich.

Vorteilhafterweise weisen die piezoelektrischen Elemente, die Sensoren bilden, eine Übertragungseinrichtung zur Übertragung des Signales an eine Auswerteeinheit auf. Die piezoelektrischen Elemente treten bevorzugt mit dem Polymer in Wechselwirkung. Dadurch kann Energie in den Werkstoff eingetragen und aus dem Werkstoff entnommen werden. Dabei sind die Sensoren bevorzugt fest mit dem Werkstoff verbunden. Vorteilhafterweise sind die Sensoren Oberflächenwellenfilter, die bevorzugt im Kontakt mit dem umgebenen Polymer-Werkstoff sind. Mit dem erfindungsgemäßen Polymer-Werkstoff ist jederzeit eine Zustandbeurteilung von außen möglich, wobei verschiedene Größen, wie z.B. Temperatur, Feuchte, Viskosität, Schubmodul, Druck usw. erfaßbar und auswertbar sind.

Die Sensoren bzw. piezoelektrischen Elemente weisen jeweils eine Antennenstruktur als Übertragungseinrichtung zum Empfangen und/oder zum Senden von Energie bzw. Informationen auf. Vorteilhafterweise haben die Sensoren eine Aufnehmerstruktur zur drahtlosen Übertragung von Energie und/oder Informationen. Die Energie wird von außen in das Bauteil eingetragen und die Signale können drahtlos und berührungsfrei abgefragt werden.

Bevorzugt sind die Sensoren bzw, piezoelektrischen Elemente in einem Laminat und/oder im Bereich einer Klebung integriert. Vorteilhafterweise weisen die Sensoren jeweils eine Einrichtung zur Erzeugung eines kodierten Signals auf. Damit können die jeweiligen Sensoren identifiziert werden und es kann bei der Auswertung der Daten ein mehrdimensionales Zustandsbild des Bauteils oder der Struktur bzw. Verklebung erhalten werden. Schäden und beginnende Materialschäden sind dabei deutlich zu erkennen und zu unterscheiden bzw. zu lokalisieren. Bevorzugt sind dabei die Sensoren gleichmäßig im Polymer-Werkstoff verteilt, oder sie befinden sich in Bereichen, die besonders gefährdet sind oder besonders hohe Beanspruchungen ausgesetzt sind.

Gemäß einem weiteren Aspekt der Erfindung wird ein Verfahren zur Herstellung eines Polymer-Werkstoffs angegeben, bei dem ein oder mehrere piezoelektrische Elemente einlaminiert oder eingeklebt werden, die jeweils eine Interdigitalstruktur zur Erzeugung einer mit dem angrenzenden Polymer-Werkstoff wechselwirkenden Oberflächenwelle aufweisen und mit einem Reflektor zur Reflexion der Oberflächenwelle versehen sind, wobei die Interdigitalstruktur an eine Antennenstruktur gekoppelt ist, um im Betrieb ein durch die reflektierte Oberflächenwelle erzeugtes Signal der Interdigitalstruktur drahtlos an eine außerhalb des Polymer-Werkstoffs gelegene Empfangs- und Auswerteeinheit zu übertragen.

Durch das Verfahren kann auf rationelle und kostengünstige Weise ein Werkstoff bzw. Bauteil hergestellt werden, dessen Zustand jederzeit von außen beurteilt werden kann, wobei Schäden oder beginnende Materialveränderungen lokalisiert werden können. Vorteilhafierweise werden als Sensoren Oberflächenwellenfilter gleichmäßig und/oder zufällig im Werkstoff verteilt.

Vorzugsweise werden die piezoelektrischen Elemente, die Sensoren bilden, vor dem Erstarren des Werkstoffs in den Werkstoff eingebracht. Mit den piezoelektrischen Elementen ist von außen zugeführte Energie aufnehmbar und ein Signal erzeugbar, das vom Zustand und/oder der Qualität des festen Werkstoffs abhängig ist.

Gemäß einem weiteren Aspekt der Erfindung wird ein System zur Materialüberprüfung von Bauteilen geschaffen, mit einem erfindungsgemäßen Polymer-Werkstoff und mit einer Einrichtung zur Anregung der im Polymer-Werkstoff einlaminierten oder eingeklebten piezoelektrischen Elemente und zum drahtlosen Empfang der Signale, die von den piezoelektrischen Elementen aufgrund der Anregung abgegeben werden, sowie mit einer Auswertestufe zur Auswertung der Signale, um Schäden und/oder Materialveränderungen im Polymer-Werkstoff festzustellen.

Gemäß einem noch weiteren Aspekt der Erfindung wird ein Verfahren zur Materialüberprüfung von Polymer-Werkstoffen, insbesondere von Faserverbundwerkstoffen und/oder Klebstoffen, angegeben, mit den Schritten: Einbringen von Energie, insbesondere in Form von akustischen oder elektromagnetischen Wellen, in einem erfindungsgemäßen Polymer-Werkstoff; Empfangen von Signalen, die von im Polymer-Werkstoff integrierten piezoelektrischen Elementen als Antwort auf die eingebrachte Energie und in Abhängigkeit vom Zustand des Polymer-Werkstoffs erzeugt und drahtlos nach außen abgegeben werden.

Mit dem Verfahren kann rasch und ohne großen Meßaufwand eine zerstörungsfreie Materialprüfung durchgeführt werden. Eine vergleichende Beurteilung, z.B. zur Schadensfrüherkennung bzw. zum Feststellen von Strukturveränderungen wird ermöglicht.

Vorteilhafterweise wird beim Auswerten der aktuelle Zustand mit einem Sollzustand verglichen, der bevorzugt durch Energieeintrag in den Werkstoff nach der Teilefertigung ermittelt wurde. Dadurch kann z. B. eine vergleichende Beurteilung des Werkstoffs gegenüber seinem Ausgangszustand erfolgen und eine Veränderung des Werkstoffs kann festgestellt werden. Bevorzugt erzeugen die Sensoren kodierte Signale, und beim Auswerten kann aus der Kodierung die Position des jeweiligen Sensors ermittelt werden. Vorteilhafterweise erfolgt die Auswertung als Matrix-Auswertung bzw. integral über den Werkstoff. Damit kann der Gesamtzustand eines Bauteils erfaßt werden, oder es können vorhandene Schäden lokalisiert werden

Die vorliegende Erfindung wird nachfolgend beispielhaft anhand der Figuren beschrieben, in denen
- **Fig. 1**: einen Teilschnitt durch einen Faserverbundwerkstoff mit integrierten Sensoren als eine bevorzugte Ausführungsform der Erfindung schematisch zeigt;
- **Fig. 2**: den prinzipiellen Aufbau eines Oberflächenwellenfilters zeigt, der im Werkstoff integriert ist;
- **Fig. 3**: schematisch ein erfindungsgemäßes System zur Materialüberprüfung von Werkstoffen oder Bauteilen zeigt.

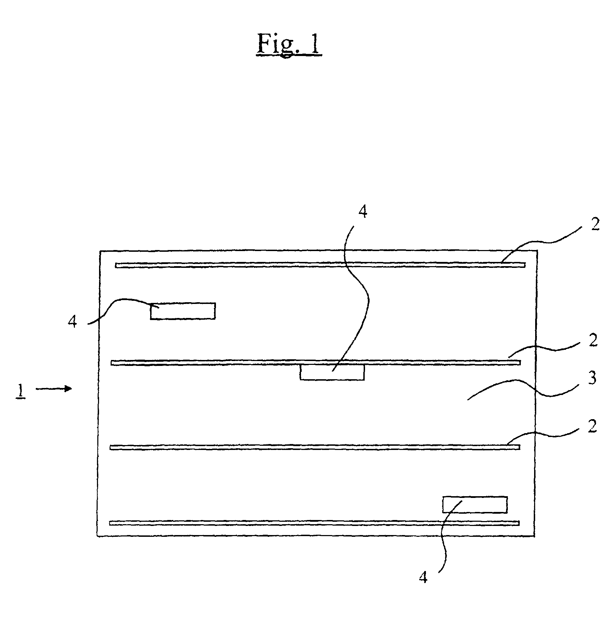

Fig. 1 zeigt einen Schnitt durch einen Bereich eines Bauteils aus einem Faserverbundwerkstoff 1. Dabei sind Fasern 2 in einem Harz 3 bzw. in einer Matrix als Basis- oder Füllmaterial eingebettet. Sensoren 4, die piezoelektrische Elemente aufweisen, sind ebenfalls im Harz 3 eingebettet, wobei sie vollständig vom Werkstoff 1 umgeben sind und fest mit dem Werkstoff 1 bzw. dem Harz 3 verbunden sind. Als Sensoren 4 sind Oberflächenwellenfilter vollständig im Faserverbundwerkstoff 1 integriert. Einige Sensoren 4 sind in der Nähe einer oder mehrerer Fasern 2 angeordnet bzw. grenzen direkt an diese an, während andere in einem Bereich aus Harz 3 angeordnet sind, der frei von Fasern 2 ist so daß sie vollständig vom Harz 3 umgeben sind.

Die Oberflächenwellenfilter bzw. Sensoren 4 können gezielt an bestimmten Stellen angeordnet sein oder zufällig bzw. gleichmäßig verteilt im Faserverbundwerkstoff 1 einlaminiert sein. Insbesondere sind die Oberflächenwellenfilter auch in Klebefugen eingeklebt, um somit auch den Zustand der Klebung beurteilen zu könnnen. Die Oberflächenwellenfilter 4 sind dreidimensional im Faserverbundwerkstoff 1 angeordnet.

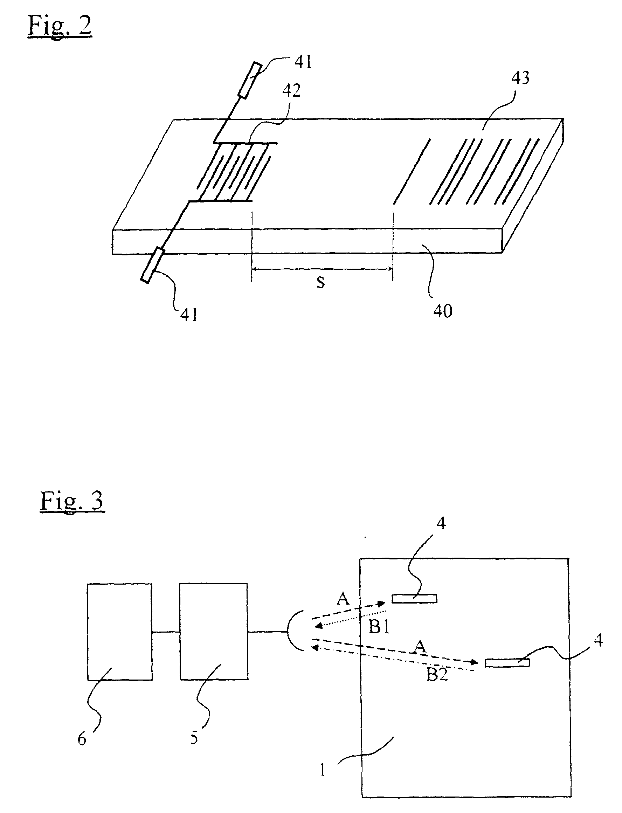

Der prinzipielle Aufbau eines geeigneten Oberflächenwellenfilters als Sensor 4 im Werkstoff ist in Fig. 2 dargestellt. Auf einer Grundplatte 40 aus piezoelektrischem Material befindet sich eine Antennenstruktur 41 als Empfangs- und Sendeeinrichtung. Hierdurch kann Energie in Form einer elektromagnetischen Welle aufgenommen werden und es kann ein Signal, das eine Information über den Zustand des Werkstoffs 1 enthält, vom Sensor 4 an eine außerhalb des Werkstoffs gelegene Empfangs- und Auswerteeinheit übertragen werden. Weiterhin befindet sich auf der Grundplatte 40 eine Interdigitalstruktur 42, die aus fingerförmig ineinandergreifenden Elektrodenpaaren besteht und mit dem piezoelektrischen Plättchen bzw. der Grundplatte 40 zusammenwirkt, um elektroakustische Wellen zu erzeugen bzw. zu detektieren. Die Interdigitalstruktur 42 kann gechirpt oder dispersiv sein, um eine Frequenz zu modulieren. Die Antennenstruktur 41 und die Interdigitalstruktur 42 bilden somit eine Kopplungsstruktur bzw. -einheit, die dem Energieein- und austrag in bzw. aus dem Werkstoff 1 dient.

Ein Reflektor 43 ist mit einem Abstand S gegenüber der Interdigitalstruktur 42 auf dem piezoelektrischen Element bzw. der Grundplatte 40 angeordnet. Eine durch die Interdigitalstruktur 42 in dem piezoelektrischem Element erzeugte Oberflächenwelle wird vom Reflektor 43 reflektiert, läuft über die Grundplatte 40 zurück und wird anschließend durch die Interdigitalstruktur 42 detektiert. Der Reflektor 43 ist in der hier beschriebenen bevorzugten Ausführungs form kodiert, d. h. er zeigt ein typisches, vom jeweiligen Oberflächenwellenfilter abhängiges Anwortsignal. Das von der Interdigitalstruktur 42 detektierte Antwortsignal wird über die Antennenstruktur 41 nach außen abgegeben.

Im Folgenden wird die Funktionsweise des Werkstoffs 1 mit den darin integrierten Sensoren 4 bei der Anregung mit einem Signal zur Materialprüfung beschrieben. Von außen wird Energie in den Werkstoff eingetragen, wobei in der bevorzugten Art des Verfahrens eine elektromagnetische Welle in den Werkstoff eingebracht und mittels der am Sensor 1 angebrachten Antennenstruktur 41 empfangen wird. An der Interdigitalstruktur 42 wirkt daraufhin eine Wechselspannung, durch die eine Oberflächenwelle im Grundplättchen 40 erzeugt wird. Diese Welle tritt in Wechselwirkung mit dem an das Grundplättchen 40 angrenzenden Werkstoffmaterial, wobei die jeweiligen Materialeigenschaften die Ausbreitungsgeschwindigkeit, Amplitude und Phase bzw. Frequenz der Welle beeinflussen.

Die physikalischen Eigenschaften des Werkstoffmaterials, die die Wellenausbreitung auf dem piezoelektrischen Kristall bzw. Plättchen 40 beeinflussen, sind z. B. Viskosität, Dieelektrizitätskonstante, Temperatur und Dichte des Materials. Strukturschäden im Material, wie z. B. Brüche, Faserbruch, Delamination, Harzschäden. Wassereinlagerungen oder eine Auflösung des Faser-Harz-Verbundes, insbesondere in der Nähe des Sensors 4, verändern somit die Charakteristika der Oberflächenwelle.

Die mechanische Oberflächenwelle wird am kodierten Reflektor 43 reflektiert, wobei die Kodierung z.B. durch einzelne Reflektorelemente erfolgt, die in charakteristischen Abständen bzw. in einer charakteristischen Reihenfolge angeordnet sind. Somit entsteht bei der Reflexion eines einzelnen Impulses eine Vielzahl von Pulsen, die nach Durchlaufen der Wegstrecke S in entgegengesetzter Richtung von der Interdigitalstruktur 42 detektiert und in eine Wechselspannung umgewandelt werden. Von der Antennenstruktur 41 werden dem Materialzustand und der Kodierung entsprechende elektromagnetische Wellen als Antwortsignal abgestrahlt. Die Signale können dann von einer außerhalb des Werkstoffs 1 bzw. Bauteils befindlichen Empfangseinrichtung empfangen und mittels einer Auswerteeinheit ausgewertet werden, um Strukturschäden bzw. Materialveränderungen festzustellen.

Auch die durch den Werkstoff hindurchdringende Welle bzw. Energie wird durch die Materialeigenschaften des Werkstoffs beeinllußt. Daher enthält das Antwortsignal auch Informationen über Material- oder Strukturschäden in Bereichen des Werkstoffs, die nicht unmittelbar bzw. nahe an einem der Sensoren 4 liegen.

Fig. 3 zeigt schematisch den Aufbau eines erfindungsgemäßen System zur Materialüherprüfung von Werkstoffen bzw. Bauteilen. Eine Anrege-/Empfangs-einheit 5 dient zur Erzeugung einer elektromagnetischen Welle, die als Anregungssignal in den Werkstoff 1 gesendet wird. Der Werkstoff 1 mit den Sensoren 4 wurde oben beschrieben. An die Anrege-/Empfangseinheit 5 5 ist eine Auswertestufe 6 gekoppelt, mit der die empfangenen Signale ausgewertet werden, die von den Sensoren 4 als Antwort auf die durch die Anrege-/Empfangseinheit 5 eingetragene Energie abgestrahlt werden.

Bei der Durchführung des Meßverfahrens wird durch die Anrege-/Empfangseinheit 5 Energie in Form einer elektromagnetischen Welle erzeugt, die als ein Anregungssignal A in den Werkstoff 1 eintritt. Die Energie durchdringt den Werkstoff, wird dann von den Sensoren 4 im Werkstoff 1 aufgenommen und es wird eine Oberflächenwelle an einer Grenzfläche zwischen Sensor und Werkstoff generiert. Die Oberflächenwelle wird an den Reflektoren 43 der in Fig. 2 gezeigten Sensoren 4 reflektiert, wobei die Reflexionssignale für jeden Sensor 4 spezifisch kodiert werden. Die reflektierten und kodierten Oberflächenwellen beinhalten Informationen über den Zustand des Werkstoffs, da die physikalischen Eigenschaften des Werkstoffs die Amplitude, Phase und Frequenz der Oberflächenwelle bceinflussen. In der Interdigitalstruktur 42 jedes Sensors 4 wird die jeweilige Oberflächenwelle in ein elektrisches Signal umgewandelt. Die Kopplungsstruktur 41, 42 jedes Sensors 4 erzeugt daraus ein sensorspezifisches elektromagnetisches Signal B1, B2, das die Kodierung des jeweiligen Sensors 4 enthält und Informationen über die Materialeigenschaften bzw. -veränderungen oder Materialschädigungen am Ort des jeweiligen Sensors 4 beinhaltet. Die Signale B1, B2 der einzelnen Sensoren 4 werden an die Anrege-/Empfangseinheit 5 gesendet und in der nachfolgenden Auswertestufe 6 ausgewertet.

Die Auswertung kann dabei über verschiedenartige Verfahren, wie z. B. Fourieranalyse. Mustererkennung oder durch neuronale Netze erfolgen. Beispielsweise können Schäden induziert oder simuliert werden, die dann ein spezifisches Muster erzeugen, und das Bauteil bzw. der Werkstoff 1 kann in diesem Fall auf diese spezifischen Muster hin untersucht werden. Es ist aber auch möglich, ein Bauteil aus einem Werkstoff kurz nach seiner Herstellung zu untersuchen und so einen Sollzustand festzulegen. Bei späteren Material-überprüfungen des Bauteils könnnen dann die Signale mit dem Sollzustand verglichen werden, wobei sich bei inzwischen aufgetretenen Schäden veränderte Signale ergeben. Dabei können Schäden detektiert werden, die unabhängig von der Lage der Sensoren sind, da die in den Wertstoff eingetragene Welle bzw. Energie von den Materialeigenschaften beeinflußt wird und bei Schädigungen des Werkstoffs zu einem veränderten Auswertsignal führt.

Der Energieeintrag in den Werkstoff 1 ist auch auf andere Art und Weise als durch elektromagnetische Wellen möglich. Zum Beispiel kann im Werkstoff eine akustische Welle durch Klopfen auf den Werkstoff 1 bzw. das Bauteil erzeugt werden. wobei die Sensoren 4 die Welle detektieren und an die Empfangseinheit 5 5 übermitteln. Auch in diesem Fall wird die Welle und damit das detektierte Signal von den Materialeigenschaften des Werkstoffs in der Umgebung der Sensoren 4 beeinflußt.

In der Auswertesufe 6 werden durch entsprechende Auswertung bzw. Verarbeitung der Meßdaten Korrekturen durchgeführt, um Effekte auszuschließen, die nicht auf Schädigungen bzw. strukturelle Materialveränderungen zurückzuführen sind. Beispielsweise wird eine Temperaturkompensation der Signale durchgeführt. um temperaturbedingte Effekte auszuschließen.

Ein erfindungsgemäßer Werkstoff wird beispielsweise hergestellt, in dem ein oder mehrere Sensoren 4 in den Werkstoff eingebracht werden, bevor dieser erstarrt ist. Zum Beispiel werden Oberflächenwellenfilter in einem Faserverbundwerkstoff einlaminiert oder in Klebefugen vor deren Aushärtung eingebracht. Dabei können bestimmte Bereiche des Werkstoffs 1 mit Oberflächenwellenfiltern versehen werden. die eine bestimmte, charakteristische Kodierung zur Lokalisation von Strukturschäden aufweisen. Es können aber auch Oberflächenwellenfilter in das Ausgangsmaterial des Werkstoffs eingestreut werden, um eine gleichmäßige bzw. zufällige oder statistische Verteilung von Sensoren 4 im Bauteil zu erhalten.

Durch die Integration der Sensoren 4, insbesondere in Form von Oberflächenwellenfiitern, in Werkstoffe wird erreicht, daß eine drahtlose Übermittlung von Strukturinformationen des Werkstoffs nach außen möglich ist, ohne daß eine eigene Energieversorgung notwendig ist. Das integrierte oder fest vom Werkstoff umschlossene System von Sensoren 4 garantiert eine immer gleiche und optimale Ankopplung an den Prüfkörper. Somit ist eine vergleichende Bewertung und Prüfung der zu prüfenden Struktur bzw. der Klebung möglich. Die Meßgröße kann auch außerhalb des Bauteils drahtlos abgefragt werden. Darüber hinaus ist eine hohe Stör- und Betriebssicherheit gewährleistet, da die Sensoren 4 keine eigenen aktiven Komponenten enthalten.

Bei dem gewählten Meßverfahren ist es möglich, verschiedene Größen, wie z. B. Temperatur, Feuchte, Viskosität, Schubmodul, Druck und Dehnungskoeffizienten usw. zu erfassen und damit Rückschlüsse auf eventuell vorhandene Schädigungen im Werkstoff und eine Lokalisierung von Schäden durchzuführen. Alterungsuntersuchungen, insbesondere an Polymerwerkstoffen, können rationell durchgeführt werden. Durch die vorliegende Erfindung wird es möglich, daß Sicherheitsüberprüfungen, beispielsweise an Luftfahrzeugen, innerhalb kürzester Zeit durchgeführt werden, wobei beginnende Strukturschädigungen in einem oder in mehreren Bauteilen erkennbar sind.

## Patentansprüche

1. Polymer-Werkstoff, **gekennzeichnet durch**
ein oder mehrere piezoelektrische Elemente (40), die in den Polymerwerkstoff (1) einlaminiert oder eingeklebt sind und
eine Interdigitalstruktur (42) zur Erzeugung einer Oberflächenwelle aufweisen, die mit dem angrenzenden Polymer-Werkstoff (1) in Wechselwirkung tritt, sowie einen Reflektor (43) zur Reflexion der Oberflächenwelle,
wobei die Interdigitalstruktur (42) an eine Antennenstruktur (41) gekoppelt ist um ein **durch** die reflektierte OberFächenwelle erzeugtes Signal der Interdigitalstruktur (42) drahtlos an eine außerhalb des Polymer-Werkstoffs (1) gelegene Empfangs- und Auswerteeinheit (5, 6) zu übertragen, zur Detektion von Strukturschäden oder Materialveränderungen des Polymer-Werkstoffs (1).

2. Polymer-Werkstoff (1) nach Anspruch 1, **dadurch gekennzeichnet, dass** die piezoelektrischen Elemente (40) gleichmäßig im Polymer-Werkstoff (1) verteilt sind.

3. Polymer-Werkstoff (1) nach Anspruch 1 oder 2, **dadurch gekennzeichnet, dass** der Reflektor (4) eine Kodierung zur Reflexion der Oberflächenwelle in einem kodierten Zustand aufweist.

4. Polymer-Werkstoff (1) nach einem der vorhergehenden Ansprüche, **dadurch gekennzeichnet, dass** er als Bauteil eines Luftfahrzeugs verwendet wird.

5. Verfahren zur Herstellung eines Polymer-Werkstoffs, **dadurch gekennzeichnet, dass** in den Polymer-Werkstoff (1) ein oder mehrere piezoelektrische Elemente (40) einlaminiert oder eingeklebt werden, die jeweils eine Interdigitalstruktur (42) zur Erzeugung einer mit dem angrenzenden Polymer-Werkstoff (1) wechselwirkenden Oberflächenwelle aufweisen und mit einem Reflektor (43) zur Reflexion der Oberflächenwelle versehen sind,
wobei die Interdigitalstruktur (42) an eine Antennenstruktur (41) gekoppelt ist um im Betrieb ein durch die reflektierte Oberfächenwelle erzeugtes Signal der Interdigitalstruktur (42) drahtlos an eine außerhalb des Polymer-Werkstoff (1) gelegene Empfangs- und Auswerteeinheit (5, 6) zu übertragen.

6. Verfahren nach Anspruch 5, **dadurch gekennzeichnet, dass** die piezoelektrischen Elemente (40) gleichmäßig und/oder zufällig im Polymer-Werkstoff (1) vor dessen Aushärtung verteilt werden.

7. Verfahren nach Anspruch 5 oder 6, **dadurch gekennzeichnet, dass** es zur Herstellung eines Bauteils eines Luftfahrzeugs durchgeführt wird.

8. System zur Materialüberprüfung von Bauteilen, **gekennzeichnet durch** einen Polymer-Werkstoff (1) nach einem der Ansprüche 1 bis 4, eine Einrichtung (5) zur Anregung der im Polymer-Werkstoff (1) einlaminierten oder eingeklebten piezoelektrischen Elemente (40) und zum drahtlosen Empfang der Signale, die von den piezoelektrischen Elementen (40) aufgrund der Anregung abgegeben werden, und eine Auswertestufe (6) zur Auswertung der Signale, um Schäden und/der Materialveränderungen im Polymer-Werkstoff (1) festzustellen.

9. Verfahren zur Materialüberprüfung von Polymer-Werkstoffen (1), **gekennzeichnet durch** die Schritte:
Einbringen von Energie, insbesondere in Form von akustischen oder elektromagnetischen Wellen, in einen Polymer-Werkstoff (1) nach einem der Ansprüche 1 bis 4;
Empfangen von Signalen, die von im Polymer-Werkstoff integrierten piezoelektrischen Elementen (40) als Antwort auf die eingebrachte Energie und in Abhängigkeit vom Zustand des Polymer-Werkstoff (1) erzeugt und drahtlos nach außen abgegeben werden; und
Auswerten der empfangenen Signale, um Informationen über den Zustand und/oder die Qualität des Polymer-Werkstoff (1) zu erhalten,

10. Verfahren nach Anspruch 9, **dadurch gekennzeichnet, dass** beim Auswerten der aktuelle Zustand mit einem Sollzustand verglichen wird, der zuvor ermittelt wurde.

11. Verfahren nach Anspruch 9 oder 10, **dadurch gekennzeichnet, dass** die piezoelektrischen Elemente (40) kodierte Signale erzeugen und beim Auswerten aus der Kodierung die Position des jeweiligen piezoelektrischen Elements (40) ermittelt wird.

12. Verfahren nach einem der Ansprüche 9 bis 11, **dadurch gekennzeichnet, daß** das Auswerten der Signale als Matrix-Auswertung über einen räumlichen Bereich des Polymer-Werkstoff (1) erfolgt, zur Ermittlung des Gesamtzustands eines Bauteils und/oder zur Ortsbestimmung eines Schadens.

## Claims

1. Polymer material, **characterised by**
one or more piezoelectric elements (40), which are laminated or incorporated by adhesion into the polymer material (1) and
have an interdigital structure (42) for production of a surface wave that interacts with the adjoining polymer material (1), as well as a reflector (43) for reflection of the surface wave,
the interdigital structure (42) being coupled to an antenna structure (41) in order to transmit wirelessly a signal of the interdigital structure (42) generated by the reflected surface wave to a receiving and evaluating unit (5, 6) located remote from the polymer material (1), for detection of structural damage to or material changes of the polymer material (1).

2. Polymer material (1) according to claim 1, **characterised in that** the piezoelectric elements (40) are uniformly distributed in the polymer material (1).

3. Polymer material (1) according to claim 1 or 2, **characterised in that** the reflector (43) has a coding for reflection of the surface wave in a coded state.

4. Polymer material (1) according to any one of the preceding claims, **characterised in that** it is used as a component of an aircraft.

5. Method for the manufacture of a polymer material, **characterised in that** one or more piezoelectric elements (40) are laminated or incorporated by adhesion into the polymer material (1), each having an interdigital structure (42) for production of a surface wave that interacts with the adjoining polymer material (1) and being provided with a reflector (43) for reflection of the surface wave,
the interdigital structure (42) being coupled to an antenna structure (41) in order in operation to transmit wirelessly a signal of the interdigital structure (42) generated by the reflected surface wave to a receiving and evaluating unit (5, 6) located remote from the polymer material (1).

6. Method according to claim 5, **characterised in that** the piezoelectric elements (40) are uniformly and/or randomly distributed in the polymer material (1) prior to curing thereof.

7. Method according to claim 5 or 6, **characterised in that** it is implemented for the manufacture of a component of an aircraft.

8. System for inspecting the material of components, **characterised by** a polymer material (1) according to one of claims 1 to 4, a device (5) for energizing the piezoelectric elements (40) laminated or incorporated by adhesion into the polymer material (1) and for receiving wirelessly the signals that are emitted by the piezoelectric elements (40) as a consequence of being energized, and an evaluating stage (6) for evaluating the signals in order to establish damage to and/or material changes in the polymer material (1).

9. Method for inspecting the material of polymer materials (1), **characterised by** the following steps:
introduction of energy, especially in the form of acoustic or electromagnetic waves, into a polymer material (1) according to any one of claims 1 to 4;
receipt of signals, which are generated by piezoelectric elements (40) integrated in the polymer material in response to the introduced energy and in dependence on the state of the polymer material (1), and are emitted wirelessly to the outside; and
evaluation of the received signals in order to obtained information about the state and/or quality of the polymer material (1).

10. Method according to claim 9, **characterised in that** during evaluation the actual state is compared with a previously determined desired state.

11. Method according to claim 9 or 10, **characterised in that** the piezoelectric elements (40) generate coded signals and during evaluation the position of the respective piezoelectric element (40) is determined from the coding.

12. Method according to any one of claims 9 to 11, **characterised in that** the evaluation of the signals is effected in the form of a matrix evaluation over a three-dimensional region of the polymer material (1), to determine the overall condition of a component and/or to establish the location of damage.

## Revendications

1. Matériau en polymère **caractérisé par** un ou plusieurs éléments piézoélectriques (40), qui sont introduits par laminage ou par collage dans le matériau en polymère (1) et qui comprennent une structure interdigitale (42) pour la production d'une onde de surface, qui entre en interaction avec le matériau en polymère adjacent (1), ainsi qu'un réflecteur (43) servant à réfléchir l'onde de surface, la structure interdigitale (42) étant couplée avec une structure d'antenne (41) pour transmettre sans fil un signal de la structure interdigitale (42) produit par l'onde de surface réfléchie à une unité de réception et d'exploitation (5, 6) située en dehors du matériau en polymère (1) afin de détecter des dommages de structures ou des modifications du matériau en polymère (1).

2. Matériau en polymère (1) selon la revendication 1, **caractérisé en ce que** les éléments piézoélectriques (40) sont répartis de manière uniforme dans le matériau en polymère (1).

3. Matériau en polymère (1) selon la revendication 1 ou 2, **caractérisé en ce que** le réflecteur (43) comprend un codage pour la réflexion des ondes de surface dans un état codé.

4. Matériau en polymère (1) selon l'une quelconque des revendications précédentes, **caractérisé en ce qu'**il est utilisé comme composant d'un aéronef.

5. Procédé pour réaliser un matériau en polymère, **caractérisé en ce que** dans le matériau en polymère (1) sont introduits par laminage ou par collage un ou plusieurs éléments piézoélectriques (40), qui comprennent respectivement une structure interdigitale (42) pour la production d'une onde de surface entrant en interaction avec le matériau en polymère adjacent (1) et qui sont munis d'un réflecteur (43) servant à réfléchir l'onde de surface, la structure interdigitale (42) étant couplée avec une structure d'antenne (41) pour, lors du fonctionnement, transmettre sans fil à une unité de réception et d'exploitation (5, 6) située en dehors du matériau en polymère (1) un signal de la structure interdigitale (42) produit par l'onde de surface réfléchie.

6. Procédé selon la revendication 5, **caractérisé en ce que** les éléments piézoélectriques (40) sont répartis de manière uniforme et/ou de manière aléatoire dans le matériau en polymère (1) avant son durcissement.

7. Procédé selon la revendication 5 ou 6, **caractérisé en ce qu'**il est mis en oeuvre pour la fabrication d'un composant d'un aéronef.

8. Système pour le contrôle des matériaux de composants, **caractérisé par** un matériau en polymère (1) selon l'une des revendications 1 à 4, par un dispositif (5) pour l'activation des éléments piézoélectriques (40) introduits par laminage ou par collage dans le matériau en polymère (1) et pour la réception sans fil des signaux qui sont fournis par les éléments piézoélectriques (40) du fait de l'activation et par un étage d'exploitation (6) pour l'exploitation des signaux dans le but de détecter des dommages ou/ou des modifications de matière dans le matériau en polymère (1)

9. Procédé de contrôle de matière de matériaux en polymère (1) **caractérisé par** les étapes suivantes :
Introduction d'énergie, en particulier sous forme d'ondes acoustiques ou électromagnétiques, dans un matériau en polymère (1) selon l'une des revendications 1 à 4 ;
Réception de signaux qui, en tant que réponse à l'énergie introduite et en fonction de l'état du matériau en polymère (1), sont produits et émis sans fil vers l'extérieur par des éléments piézoélectriques (40) intégrés dans le matériau en polymère et
Exploitation des signaux reçus pour acquérir des informations sur l'état et/ou sur la qualité du matériau en polymère (1).

10. Procédé selon la revendication 9, **caractérisé en ce que** lors de l'exploitation l'état actuel est comparé avec un état de consigne qui a été déterminé auparavant.

11. Procédé selon la revendication 9 ou 10, **caractérisé en ce que** les éléments piézoélectriques (40) produisent des signaux codés et que lors de l'exploitation la position de l'élément piézoélectrique respectif (40) est déterminée à partir du codage.

12. Procédé selon l'une quelconque des revendications 9 à 11, **caractérisé en ce que** l'exploitation des signaux a lieu comme exploitation matricielle sur une zone spatiale du matériau en polymère (1) et sert à la détermination de l'état d'ensemble d'un composant et/ou à la localisation d'un dommage.
